# EUROPÄISCHE PATENTSCHRIFT

(11) **EP 3 477 238 B1**
(45) Veröffentlichungstag und Bekanntmachung des Hinweises auf die Patenterteilung: **10.04.2024**
(21) Anmeldenummer: 18201379.7
(22) Anmeldetag: 19.10.2018
(51) Int. Cl.: F28F 27/02, B60H 1/22, F24H 9/20, F28D 7/12, H01H 37/04

(54) **WÄRMETAUSCHERANORDNUNG**
HEAT EXCHANGER ASSEMBLY
DISPOSITIF ÉCHANGEUR THERMIQUE

(30) Priorität: 25.10.2017 DE 102017124912
(43) Veröffentlichungstag der Anmeldung: 01.05.2019
(73) Patentinhaber: Eberspächer Climate Control Systems GmbH, 73730 Esslingen (DE)
(72) Erfinder: Humburg, Michael, 73035 Göppingen (DE)
(74) Vertreter: Ruttensperger Lachnit Trossin Gomoll

(56) Entgegenhaltungen:
- DE-A1- 3 839 244
- DE-A1- 3 942 732
- DE-A1- 10 155 844
- US-A1- 2002 046 831

## Beschreibung

Die vorliegende Erfindung betrifft eine Wärmetauscheranordnung beispielsweise für ein brennstoffbetriebenes Fahrzeugheizgerät.

Insbesondere bei sogenannten Wasser-Heizgeräten umfasst eine Wärmetauscheranordnung ein in seiner Struktur im Wesentlichen topfartiges Wärmetauschergehäuse beispielsweise mit zwei ineinander eingesetzten, topfartigen Gehäuseteilen. Ein inneres dieser beiden Gehäuseteile bildet eine Innenwandung mit einer Innen-Umfangswandung und einer Innen-Bodenwandung. Ein Äußeres dieser beiden Gehäuseteilen bildet eine Außenwandung mit einer Außen-Umfangswandung und einer Außen-Bodenwandung. Zwischen der Innenwandung und der Außenwandung ist ein von einem Wärmeträgermedium, also beispielsweise Wasser, durchströmbarer Wärmeträgermedium-Strömungsraum begrenzt.

Zur Bereitstellung von Information über den thermischen Zustand des Wärmeträgermediums einerseits bzw. der Wärmetauscheranordnung und somit eines damit ausgestatteten Fahrzeugheizgeräts andererseits kann ein Sensor, beispielsweise Temperatursensor, eine Sensor-Aufnahmeöffnung im Außengehäuse durchgreifend angeordnet sein. Mit einem Strömungsraum-Eingriffsbereich kann ein derartiger Sensor in den Wärmeträgermedium-Strömungsraum eingreifend positioniert werden, um dort in thermische Wechselwirkung mit dem darin vorhandenen bzw. strömenden Wärmeträgermedium zu treten. Ferner kann der Sensor mit dem Strömungsraum-Eingriffsbereich sich an der Innenwandung abstützend positioniert sein, um auf diese Art und Weise in direkte thermische Wechselwirkung mit der Innenwandung zu treten und auch den thermischen Zustand der Innenwandung repräsentierende Information bereitstellen zu können.

Eine Wärmetauscheranordnung gemäß dem Oberbegriff des Anspruchs 1 ist aus der US 2002/0046831 A1 bekannt. Bei dieser Wärmetauscheranordnung ist das Vorspannorgan als Schraubendruckfeder ausgebildet, welche an dem an dem Außengehäuse vorgesehenen Vorspannorgan-Widerlagebereich einerseits und über eine Leiterplatte eines Steuergeräts bezüglich des Sensors andererseits abgestützt ist.

Es ist die Aufgabe der vorliegenden Erfindung, eine Wärmetauscheranordnung beispielsweise für ein brennstoffbetriebenes Fahrzeugheizgerät bereitzustellen, welche in einfacher, gleichwohl zuverlässiger Art und Weise eine korrekte Positionierung eines in einen Wärmeträgermedium-Strömungsraum eingreifend positionierten Sensors gestattet.

Erfindungsgemäß wird diese Aufgabe gelöst durch eine Wärmetauscheranordnung, insbesondere für ein brennstoffbetriebenes Fahrzeugheizgerät, gemäß Anspruch 1. Diese umfasst ein Wärmetauschergehäuse mit einer Außenwandung und einer Innenwandung, wobei die Außenwandung und die Innenwandung einen von einem Wärmeträgermedium durchströmbaren Wärmeträgermedium-Strömungsraum umgrenzen, wobei in der Außenwandung wenigstens eine Sensor-Aufnahmeöffnung ausgebildet ist und ein Sensor in der wenigstens einen Sensor-Aufnahmeöffnung fluiddicht und verschiebbar und mit einem Strömungsraum-Eingriffsbereich in den Wärmeträgermedium-Strömungsraum eingreifend und an der Innenwandung sich abstützend aufgenommen ist, wobei dem Sensor ein diesen zum Abstützen an der Innenwandung beaufschlagendes Vorspannorgan zugeordnet ist, wobei das Vorspannorgan in einem Fixierbereich bezüglich eines die Wärmetauscheranordnung wenigstens bereichsweise umgebenden Außengehäuses festgelegt ist und in einem Beaufschlagungsbereich den Sensor zur Abstützung an der Innenwandung beaufschlagt.

Bei der erfindungsgemäß aufgebauten Wärmetauscheranordnung ist das Vorspannorgan grundsätzlich am Außengehäuse getragen, so dass bei Anbringung des Außengehäuses an der Wärmetauscheranordnung bzw. einem diese aufweisenden Heizgerät das Vorspannorgan in Wechselwirkung mit dem durch dieses zu beaufschlagenden Sensor gebracht wird und keine weiteren Montagemaßnahmen oder Montagevorkehrungen bereitgestellt werden müssen, um den Sensor in Wechselwirkung mit dem Vorspannorgan bringen oder halten zu können.

Das Vorspannorgan ist in seinem Beaufschlagungsbereich bezüglich des Sensors abgestützt, und an dem Außengehäuse ist der Sensor-Aufnahmeöffnung gegenüberliegend ein Vorspannorgan-Widerlagerbereich vorgesehen. Das Vorspannorgan kann sich somit einerseits am Sensor und andererseits am Außengehäuse abstützen, so dass wesentliche den Fixierbereich aufgrund der Beaufschlagung des Sensors belastende Reaktionskräfte vermieden werden.

Um bei angebrachtem Außengehäuse überprüfen zu können, ob ein Vorspannorgan vorgesehen und in der richtigen Stellung angeordnet ist, wird vorgeschlagen, dass im Vorspannorgan-Widerlagerbereich des Außengehäuses eine Öffnung vorgesehen ist.

Für eine einfach zu realisierende, gleichwohl jedoch zuverlässige Vorspannwechselwirkung ist das Vorspannorgan in seinem Beaufschlagungsbereich U-förmig ausgebildet und ist mit einem ersten U-Schenkel bezüglich des Vorspannorgan-Widerlagerbereichs abgestützt und mit einem zweiten U-Schenkel bezüglich des Sensors abgestützt.

Um bei der Abstützung bezüglich des Außengehäuses Kippmomente im Bereich des Beaufschlagungsbereichs des Vorspannorgans zu vermeiden, wird vorgeschlagen, dass im Vorspannorgan-Widerlagerbereich eine zu einer Längsmittenachse des Sensors oder/und der diesen aufnehmenden Sensor-Aufnahmeöffnung im Wesentlichen orthogonale Widerlagerfläche zur Abstützung des Beaufschlagungsbereichs des Vorspannorgans vorgesehen ist.

Zur Festlegung des Vorspannorgans bezüglich des Außengehäuses kann das Außengehäuse einen in Richtung zur Außenwandung hervorstehenden und in eine Fixieröffnung des Fixierbereichs eingreifenden Fixiervorsprung aufweisen.

Dabei kann in einfacher Art und Weise ein Loslösen des Vorspannorgans vom Fixiervorsprung verhindert werden, wenn am Innenumfang der Fixieröffnung eine Mehrzahl von an einer Außenumfangsfläche des Fixiervorsprungs angreifenden Eingriffsvorsprüngen vorgesehen ist.

Um beim Aufschieben des Fixierbereichs auf den Fixiervorsprung in einfacher Art und Weise die Eingriffsvorsprünge zu verformen und dabei in eine unter Vorspannung an der Außenumfangsfläche des Fixiervorsprung angreifende Positionierung zu bringen, kann der Fixiervorsprung in Richtung auf die Außenwandung zu sich, vorzugsweise konisch, verjüngend ausgebildet sein.

Bei einer alternativen Ausgestaltung zur Festlegung des Vorspannorgans am Außengehäuse wird vorgeschlagen, dass die Fixieröffnung schlüssellochartig geformt ist, und dass der Fixiervorsprung einen einen Schmalbereich der Fixieröffnung übergreifenden Vorsprungskopf aufweist.

Zum Verhindern einer Drehung des Vorspannorgans um den Fixiervorsprung kann am Außengehäuse eine das Vorspannorgan gegen Drehung um den Fixiervorsprung haltende Drehsicherungsformation, vorzugsweise mit wenigstens einem in Richtung zur Außenwandung vorstehenden Drehsicherungsvorsprung, vorgesehen sein.

Das Vorspannorgan ist zum Bereitstellen einer einfach, gleichwohl jedoch stabil und durch sich ändernde thermische Umgebungsbedingungen im Wesentlichen nicht beeinträchtigten Ausgestaltung blattfederartig ausgebildet. Dabei ist in einem Endbereich des Vorspannorgans der Fixierbereich und in einem anderen Endbereich des Vorspannorgans der Beaufschlagungsbereich vorgesehen. Das Außengehäuse kann aus Kunststoffmaterial aufgebaut sei. Der Sensor kann ein Temperatursensor sein.

Die Erfindung betrifft ferner ein brennstoffbetriebenes Fahrzeugheizgerät, umfassend einen Brennerbereich und eine erfindungsgemäß aufgebaute Wärmetauscheranordnung.

Die vorliegende Erfindung wird nachfolgend mit Bezug auf die beiliegenden Figuren detailliert beschrieben. Es zeigt:
- Fig. 1: eine teilweise im Schnitt dargestellte Prinzipansicht eines brennstoffbetriebenen Fahrzeugheizgeräts;
- Fig. 2: eine Ansicht eines bei dem Fahrzeugheizgerät der Fig. 1 eingesetzten Vorspannorgans in Blickrichtung II in Fig. 1;
- Fig. 3: eine perspektivische Ansicht eines bei dem Fahrzeugheizgerät der Fig. 1 vorgesehenen Außengehäuses;
- Fig. 4: eine der Fig. 2 entsprechende Darstellung einer alternativen Ausgestaltungsart eines Vorspannorgans.

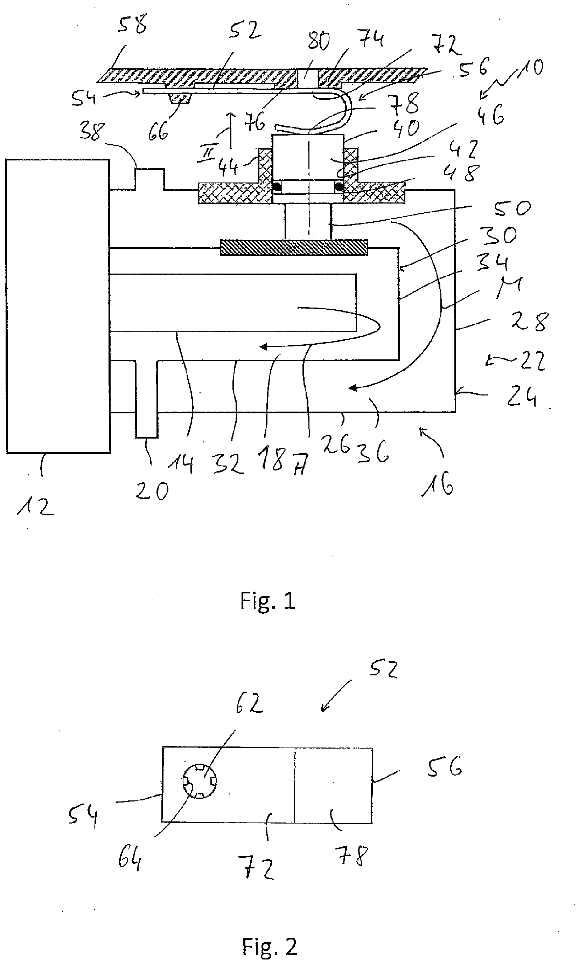

In Fig. 1 ist ein brennstoffbetriebenes Fahrzeugheizgerät allgemein mit 10 bezeichnet. Das Fahrzeugheizgerät 10 umfasst einen Brennerbereich 12, welchem Brennstoff und Verbrennungsluft zugeführt werden. Das bei der Verbrennung eines aus dem Brennstoff und der Verbrennungsluft gebildeten Gemisches entstehende Abgas A strömt aus einer Brennkammer des Brennerbereichs 12 durch ein Flammrohr 14 hindurch und verlässt dieses an seinem vom Brennerbereich 12 entfernten axialen Endbereich. Das Abgas A strömt nach Umlenkung an einen Wärmetauschergehäuse 16 entlang eines zwischen dem Wärmetauschergehäuse 16 und dem Flammrohr 14 gebildeten Abgas-Strömungsraums 18 zurück zu einem Abgasauslass 20.

Das Wärmetauschergehäuse 16 einer allgemein mit 22 bezeichneten Wärmetauscheranordnung umfasst eine Außenwandung 24 mit einer Außen-Umfangswandung 26 und einer Außen-Bodenwandung 28. Das Wärmetauschergehäuse 16 umfasst ferner eine Innenwandung 30 mit einer Innen-Umfangswandung 32 und einer Innen-Bodenwandung 34. Somit begrenzt die mit topfartiger Struktur ausgestattete Außenwandung 24 zusammen mit der ebenfalls mit topfartiger Struktur ausgebildeten Innenwandung 30 einen Wärmeträgermedium-Strömungsraum 36. Über einen Wärmeträgermediumeinlass 38 kann ein flüssiges Wärmeträgermedium M, also beispielsweise Wasser, in den Wärmeträgermedium-Strömungsraum 36 eindringen, diesen durchströmen und dabei durch thermische Wechselwirkung mit der Innenwandung 30 Wärme aufnehmen und kann den Wärmeträgermedium-Strömungsraum 36 an einem in Fig. 1 nicht dargestellten Wärmeträgermediumauslass verlassen, der im gleichen axialen Endbereich des Wärmetauschergehäuses 16 positioniert sein kann, wie der Wärmeträgermediumeinlass 38.

Bei dem mit topfartiger Struktur ausgebildeten Wärmetauschergehäuse 16 ist die thermisch stark belastete Innenwandung 30 aus Metallmaterial, beispielsweise Aluminium, aufgebaut. Die thermisch weniger stark belastete Außenwandung 24 ist aus Gründen des geringeren Gewichts und aus Kostengründen vorteilhafterweise aus Kunststoffmaterial aufgebaut und ist mit der Innenwandung 30 beispielsweise durch Verklebung verbunden, um einen fluiddichten Abschluss des Wärmeträgermedium-Strömungsraums 36 zu erreichen.

Um Information über die Temperatur des Wärmeträgermediums M oder/und der Innenwandung 30 bereitzustellen, ist ein allgemein mit 40 bezeichneter Temperatursensor vorgesehen. Der Temperatursensor 40 ist in einer Sensor-Aufnahmeöffnung 42 in der Außen-Umfangswandung 26 der Außenwandung 24 aufgenommen. Dazu kann die Außen-Umfangswandung 26 beispielsweise einen nach außen vorstehenden Sensorstutzen 44 aufweisen. Der Sensor 40 ist mit einem Tragebereich 46 in der Sensor-Aufnahmeöffnung 42 in Richtung einer Längsmittenachse L des Sensors 40 bzw. der Sensor-Aufnahmeöffnung 42 verschiebbar aufgenommen. Ein den Tragebereich 46 ringartig umgebendes Dichtorgan 48, beispielsweise ein aus Gummimaterial aufgebauter O-Ring, stellt einen fluiddichten Abschluss zwischen dem Tragebereich 46 und der Außen-Umfangswandung 26 bzw. den Sensorstutzen 44 bereit.

Mit einem in den Wärmeträgermedium-Strömungsraum 36 eingreifenden Strömungsraum-Eingriffsbereich 50 erstreckt sich der Sensor 40 durch den Wärmeträgermedium-Strömungsraum 36 hindurch und ist in Richtung der Längsmittenachse L an der Außenseite der Innen-Umfangswandung 32 der Innenwandung 30 abgestützt. Auf diese Art und Weise steht der Sensor 40 in thermischer Wechselwirkung mit der Innenwandung 30 und kann deren Temperatur repräsentierende Information bereitstellen. Somit kann der Sensor 40 insbesondere als Überhitzungssensor arbeiten bzw. aus der von dem Sensor 40 bereitgestellten Information darauf geschlossen werden, ob die Gefahr einer Überhitzung der Innenwandung 30 besteht.

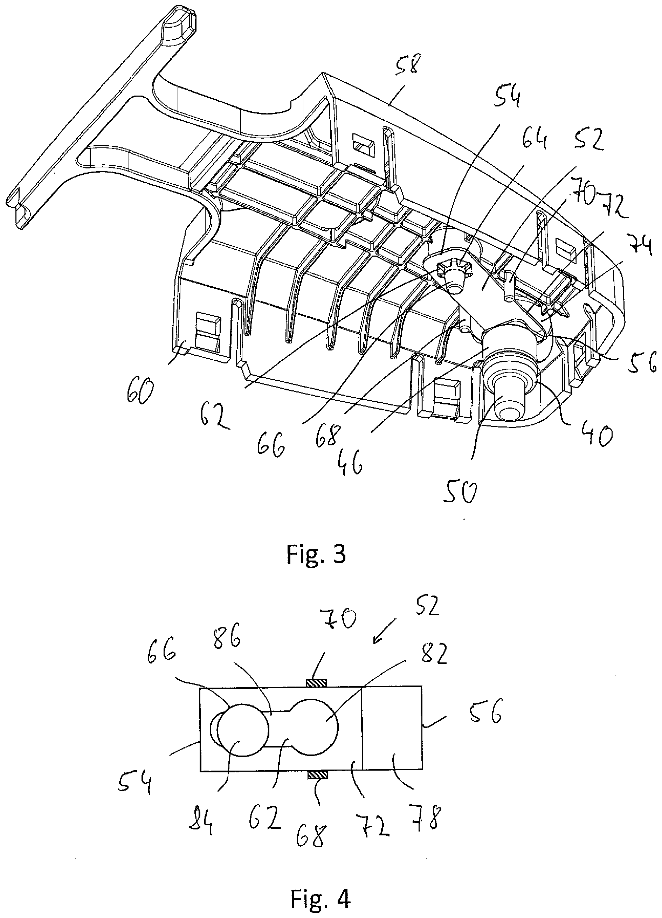

Um den Sensor 40 in seiner an der Innenwandung 3 sich abstützenden Position zu halten, ist ein allgemein mit 52 bezeichnetes Vorspannorgan vorgesehen. Das Vorspannorgan 52 ist beispielsweise blattfederartig aus Blech bzw. Federstahl oder dergleichen gebildet und weist einen Fixierbereich 54 sowie einen Beaufschlagungsbereich 56 auf. Mit seinem Fixierbereich 54 ist das Vorspannorgan 52 einem in Fig. 3 erkennbaren Außengehäuse 58 festgelegt. Das Außengehäuse 58 ist vorzugsweise aus Kunststoffmaterial geformt und kann durch eine Mehrzahl von Rastlaschen 60 am Fahrzeugheizgerät 10, insbesondere im Bereich der Wärmetauscheranordnung 22, diese bereichsweise überdeckend festgelegt werden.

In seinem Fixierbereich 54 weist das in Fig. 2 dargestellte Vorspannorgan 52 eine Fixieröffnung 62 auf. Am Innenumfang der Fixieröffnung steht eine Mehrzahl von Eingriffsvorsprüngen 64 nach Innen hervor. In Zuordnung zu der Fixieröffnung 62 ist am Außengehäuse 58 ein sich beispielsweise konisch verjüngender Fixiervorsprung 66 vorgesehen. Das Vorspannorgan 52 wird mit seiner Fixieröffnung 62 auf den Fixiervorsprung 66 aufgeschoben. Dabei werden die Eingriffsvorsprünge 64 entgegen der Aufschubrichtung geringfügig verformt und greifen somit unter Vorspannung an der Außenoberfläche des Fixiervorsprungs 66 an. Da das Außengehäuse 58 aus Kunststoffmaterial aufgebaut ist, können die einen integralen Bestandteil des Vorspannorgans 52 bildenden Eingriffsvorsprünge 64 sich in das Aufbaumaterial des Fixiervorsprungs 66 eingraben und sorgen somit für eine stabile Fixierung des Vorspannorgans 52 am Außengehäuse 58. Um dabei eine Drehung des Vorspannorgans 52 um den Fixiervorsprung 66 zu verhindern und somit eine definierte Positionierung am Außengehäuse 58 vorzugeben, können in Zuordnung zu dem Vorspannorgan 52 im Abstand zum Fixiervorsprung 66 Drehsicherungsvorsprünge 68, 70 vorgesehen sein, die bei korrekter Positionierung des Vorspannorgans 52 beidseits desselben positioniert sind und somit eine Verdrehung bzw. Verschwenkung des Vorspannorgans 52 verhindern.

In seinem Beaufschlagungsbereich 56 ist das Vorspannorgan 52 U-förmig ausgebildet. Mit einem in seiner Verlängerung auch den Fixierbereich 54 bereitstellenden ersten U-Schenkel 72 stützt das Vorspannorgan 52 sich an einem am Außengehäuse 58 ausgebildeten Vorspannorgan-Widerlagerbereich 74 ab. Der Vorspannorgan-Widerlagerbereich 74 stellt eine zur Längsmittenachse L des Temperatursensors 40 bzw. der Sensor-Aufnahmeöffnung 42 im Wesentlichen orthogonale Widerlagerfläche 76 bereit, an welcher der in diesem Bereich im Wesentlichen eben, also ungekrümmt ausgebildete erste U-Schenkel 72 flächig anliegt.

Mit seinem zweiten U-Schenkel 78 beaufschlagt das Vorspannorgan 52 den Tragebereich 46 des Sensors 40. Der zweite U-Schenkel 78 kann in Richtung zum Tragebereich 46 hin konvex gewölbt sein, so dass dieser den Tragebereich 46 in seinem zentralen Bereich in einer im Wesentlichen in Richtung der Längsmittenachse L gerichteten Beaufschlagungsrichtung beaufschlagt. Der Bereich, in welchem der zweite U-Schenkel 78 den Tragebereich 46 des Sensors 40 beaufschlagt, liegt dem Vorspannorgan-Widerlagerbereich 74 gegenüber, so dass bei Abstützung des Beaufschlagungsbereichs 56 am Außengehäuse 58 im Wesentlichen kein Kippmoment am Vorspannorgan 52 entsteht und somit der Fixierbereich 54 im Wesentlichen keiner aufgrund der Vorspannung des Sensors 40 entstehenden Kraftwirkung unterliegt.

Um bei am Fahrzeugheizgerät 10 angebrachtem Außengehäuse 58 überprüfen zu können, dass ein Vorspannorgan 52 vorgesehen und in der korrekten Positionierung ist, kann am Außengehäuse 52 im Bereich des Vorspannorgan-Widerlagerbereichs 74 eine Öffnung 80 ausgebildet sein, durch welche hindurch das Vorspannorgan 52 visuell wahrgenommen werden kann.

Eine alternative Ausgestaltungsart des Vorspannorgans 52 ist in Fig. 4 dargestellt. Bei der in Fig. 4 dargestellten Ausgestaltungsart ist die Fixieröffnung 62 schlüssellochartig geformt. Der Fixiervorsprung 66 des Außengehäuses 58 weist eine Pilzform bzw. einen Hinterschneidungsbereich auf. Ein Breitbereich 82 der Fixieröffnung 62 ist so dimensioniert, dass ein Vorsprungskopf 84 des Fixiervorsprungs 66 durch diesen hindurch in die Fixieröffnung 62 eingeführt werden kann. Ist dies erfolgt, kann das Vorspannorgan 52 in seiner Längsrichtung verschoben werden, so dass der Fixiervorsprung 66 in den Schmalbereich 86 der Fixieröffnung 62 eintritt und somit das Vorspannorgan 52 mit seinem Vorsprungskopf 84 hintergreift. Die am Außengehäuse vorgesehenen Drehsicherungsvorsprünge 68, 70 sorgen wiederum für eine definierte Positionierung und verhindern eine Verdrehung des Vorspannorgans 52 um den Fixiervorsprung 66. Um auch eine Arretierung in der Längsrichtung des Vorspannorgans 52 zu gewährleisten, kann beispielsweise die am Fixiervorsprung 66 gebildete, nutartige Hinterschneidung so dimensioniert sein, dass bei Eintreten des Fixiervorsprungs 66 in den Schmalbereich 86 der Vorsprungskopf 84 den Fixierbereich 54 des Vorspannorgans 52 klemmt.

Mit der erfindungsgemäßen Ausgestaltung eines Vorspannorgans 52 wird es möglich, einerseits eine Belastung desjenigen Bereichs, in welchem dieses bezüglich des Außengehäuses 58 fixiert ist, zu vermeiden, andererseits eine definierte Positionierung des Sensors 40 zu gewährleisten. Somit kann der Sensor 40, einer thermisch induzierten Ausdehnung bzw. Verformung der Innenwandung 30 folgend, sich in der Sensor-Aufnahmeöffnung 42 verschieben, da im Allgemeinen die Außenwandung 24 weniger stark thermisch belastet ist und insofern auch einer geringeren thermisch induzierten Formänderung unterliegt. Dies ist insbesondere daher wichtig, da der Sensor 40 im Allgemeinen in demjenigen Bereich mit der Innenwandung 30 in thermischer Wechselwirkung steht, in welchem diese besonders stark thermisch belastet ist. Dies ist derjenige Bereich, in welchem die Innen-Umfangswandung 32 an die Innen-Bodenwandung 34 anschließt, also derjenige Bereich der Innen-Umfangswandung 32, in welchem das vergleichsweise heiße Abgas aus dem Flammrohr 14 austritt und auf die Innenoberfläche der Innenwandung 30 auftrifft.

## Patentansprüche

1. Wärmetauscheranordnung, insbesondere für ein brennstoffbetriebenes Fahrzeugheizgerät, umfassend ein Wärmetauschergehäuse (16) mit einer Außenwandung (24) und einer Innenwandung (30), wobei die Außenwandung (24) und die Innenwandung (30) einen von Wärmeträgermedium (M) durchströmbaren Wärmeträgermedium-Strömungsraum (36) umgrenzen, wobei in der Außenwandung (24) wenigstens eine Sensor-Aufnahmeöffnung (42) ausgebildet ist und ein Sensor (40) in der wenigstens einen Sensor-Aufnahmeöffnung (42) fluiddicht und verschiebbar und mit einem Strömungsraum-Eingriffsbereich (50) in den Wärmeträgermedium-Strömungsraum (36) eingreifend und an der Innenwandung (30) sich abstützend aufgenommen ist, wobei ein dem Sensor (40) zugeordnetes, diesen zum Abstützen an der Innenwandung (30) beaufschlagendes Vorspannorgan (52) vorgesehen ist, wobei das Vorspannorgan (52) in einem Beaufschlagungsbereich (56) den Sensor (40) zur Abstützung an der Innenwandung (30) beaufschlagt, wobei das Vorspannorgan (52) in seinem Beaufschlagungsbereich (56) bezüglich des Sensors (40) abgestützt ist, und wobei ein das Wärmetauschergehäuse (16) wenigstens bereichsweise umgebendes Außengehäuse (58) vorgesehen ist, wobei an dem Außengehäuse (58) der Sensor-Aufnahmeöffnung (42) gegenüberliegend ein Vorspannorgan-Widerlagerbereich (74) vorgesehen ist, wobei das Vorspannorgan (52) in einem Fixierbereich (54) bezüglich des Außengehäuses (58) festgelegt ist,
**dadurch gekennzeichnet,**
- **dass** das Vorspannorgan (52) blattfederartig ausgebildet ist, wobei in einem Endbereich des Vorspannorgans (52) der Fixierbereich (54) und in einem anderen Endbereich des Vorspannorgans (52) der Beaufschlagungsbereich (56) vorgesehen sind,
- **dass** das Vorspannorgan (52) in seinem Beaufschlagungsbereich (56) U-förmig ausgebildet ist und mit einem ersten U-Schenkel (72) bezüglich des Vorspannorgan-Widerlagerbereichs (74) abgestützt ist und mit einem zweiten U-Schenkel (78) bezüglich des Sensors (40) abgestützt ist.

2. Wärmetauscheranordnung nach Anspruch 1, **dadurch gekennzeichnet, dass** im Vorspannorgan-Widerlagerbereich (74) des Außengehäuses (58) eine Öffnung (80) vorgesehen ist.

3. Wärmetauscheranordnung nach einem der Ansprüche 1 oder 2, **dadurch gekennzeichnet, dass** im Vorspannorgan-Widerlagerbereich (74) eine zu einer Längsmittenachse (L) des Sensors (40) oder/und der diesen aufnehmenden Sensor-Aufnahmeöffnung (42) im Wesentlichen orthogonale Widerlagerfläche (76) zur Abstützung des Beaufschlagungsbereichs (56) des Vorspannorgans (52) vorgesehen ist.

4. Wärmetauscheranordnung nach einem der vorangehenden Ansprüche, **dadurch gekennzeichnet, dass** das Außengehäuse (58) einen in Richtung zur Außenwandung (34) hervorstehenden und in eine Fixieröffnung (62) des Fixierbereichs (54) eingreifenden Fixiervorsprung (66) aufweist.

5. Wärmetauscheranordnung nach Anspruch 4, **dadurch gekennzeichnet, dass** am Innenumfang der Fixieröffnung (62) eine Mehrzahl von an einer Außenumfangsfläche des Fixiervorsprungs (66) angreifenden Eingriffsvorsprüngen (64) vorgesehen ist.

6. Wärmetauscheranordnung nach Anspruch 5, **dadurch gekennzeichnet, dass** der Fixiervorsprung (66) in Richtung auf die Außenwandung (24) zu sich, vorzugsweise konisch, verjüngend ausgebildet ist.

7. Wärmetauscheranordnung nach Anspruch 4, **dadurch gekennzeichnet, dass** die Fixieröffnung (62) schlüssellochartig geformt ist, und dass der Fixiervorsprung (66) einen einen Schmalbereich (86) der Fixieröffnung (62) übergreifenden Vorsprungskopf (84) aufweist.

8. Wärmetauscheranordnung nach einem der Ansprüche 4-7, **dadurch gekennzeichnet, dass** am Außengehäuse (58) eine das Vorspannorgan (52) gegen Drehung um den Fixiervorsprung (66) haltende Drehsicherungsformation, vorzugsweise mit wenigstens einem in Richtung zur Außenwandung (24) vorstehenden Drehsicherungsvorsprung (68, 70), vorgesehen ist.

9. Wärmetauscheranordnung nach einem der vorangehenden Ansprüche, **dadurch gekennzeichnet, dass** das Außengehäuse (58) aus Kunststoffmaterial aufgebaut ist, oder/und dass der Sensor (40) ein Temperatursensor ist.

10. Brennstoffbetriebenes Fahrzeugheizgerät, umfassend einen Brennerbereich (12) und eine Wärmetauscheranordnung (22) nach einem der vorangehenden Ansprüche.

## Claims

1. Heat exchanger unit, especially for a fuel-operated vehicle heater, comprising a heat exchanger housing (16) with an outer wall (24) and with an inner wall (30), wherein the outer wall (24) and the inner wall (30) define a heat carrier medium flow space (36), through which heat carrier medium (M) can flow, wherein at least one sensor mounting opening (42) is formed in the outer wall (24) and a sensor (40) is received in the at least one sensor mounting opening (42) in a fluid-tight and displaceable manner and protruding into the heat carrier medium flow space (36) with a flow space engagement area (50) and supported at the inner wall (30), wherein a prestressing element (52) associated with the sensor (40) and acting on the sensor for support at the inner wall (30) is provided, wherein the prestressing element (52) in an action area (56) acts on the sensor (40) for support at the inner wall (30), wherein the prestressing element (52) in its action area (56) is supported in relation to the sensor (40) and wherein an outer housing (58) is provided surrounding the heat exchanger housing (16) at least in areas, wherein a prestressing element abutment area (74) is provided at the outer housing (58) located opposite the sensor mounting opening (42), wherein the prestressing element (52) is fixed in a fixing area (54) in relation to the outer housing (58), **characterized in that**,
- the prestressing element (52) has a leaf spring-like configuration, wherein the fixing area (54) is provided in an end area of the prestressing element (52) and the action area (56) is provided in another end area of the prestressing element (52),
- the prestressing element (52) has a U-shaped configuration in its action area (56) and is supported with a first U-leg (72) in relation to the prestressing element abutment area (74) and is supported with a second U-leg (78) in relation to the sensor (40).

2. Heat exchanger unit in accordance with claim 1, **characterized in that** an opening (80) is provided in the prestressing element abutment area (74) of the outer housing (58).

3. Heat exchanger unit in accordance with one of the claims 1 or 2, **characterized in that** an abutment surface (76) that is essentially at right angles to a central longitudinal axis (L) of the sensor (40) or/and to the sensor mounting opening (42) receiving same is provided in the prestressing element abutment area (74) for supporting the action area (56) of the prestressing element (52).

4. Heat exchanger unit in accordance with one of the above claims, **characterized in that** the outer housing (58) has a fixing projection (66), which projects in the direction of the outer wall (34) and protrudes into a fixing opening (62) of the fixing area (54).

5. Heat exchanger unit in accordance with claim 4, **characterized in that** a plurality of protruding projections (64) acting on an outer circumferential wall of the fixing projection (66) are provided on the inner circumference of the fixing opening (62).

6. Heat exchanger unit in accordance with claim 5, **characterized in that** the fixing projection (66) has a preferably conically tapering configuration in the direction of the outer wall (24).

7. Heat exchanger unit in accordance with claim 4, **characterized in that** the fixing opening (62) has a keyhole shape and that the fixing projection (66) has a projection head (84) overlapping a narrow area (86) of the fixing opening (62).

8. Heat exchanger unit in accordance with one of the claims 4-7, **characterized in that** an anti-rotation formation, which holds the prestressing element (52) against rotation about the fixing projection (66), is provided at the outer housing (58), preferably with at least one anti-rotation projection (68, 70) protruding in the direction of the outer wall (24).

9. Heat exchanger unit in accordance with one of the above claims, **characterized in that** the outer housing (58) is made of a plastic material or/and that the sensor (40) is a temperature sensor.

10. Fuel-operated vehicle heater, comprising a burner area (12) and a heat exchanger unit (22) in accordance with one of the above claims.

## Revendications

1. Unité d'échangeur de chaleur, en particulier pour un chauffage de véhicule opéré au carburant, comprenant un boîtier d'échangeur de chaleur (16) avec une paroi extérieure (24) et une paroi intérieure (30), dans lequel la paroi extérieure (24) et la paroi intérieure (30) définissent un espace de circulation de fluide caloporteur (36), à travers lequel le fluide caloporteur (M) peut circuler, dans lequel au moins une ouverture de logement de capteur (42) est formée dans la paroi extérieure (24) et dans lequel un capteur (40) est reçu, dans l'au moins une ouverture de logement de capteur (42) de manière étanche aux fluides et déplaçable et faisant saillie dans l'espace d'écoulement de fluide caloporteur (36) avec une zone d'engagement d'espace d'écoulement (50) et supporté sur la paroi intérieure (30), dans lequel un élément de précontrainte (52) est prévu, associé au capteur (40) et agissant sur le capteur pour un support au niveau de la paroi intérieure (30), dans lequel l'élément de précontrainte (52) agit sur le capteur (40) dans une zone d'action (56) pour le support sur la paroi intérieure (30), dans lequel l'élément de précontrainte (52) est supporté dans sa zone d'action (56) par rapport au capteur (40), et dans lequel un boîtier extérieur (58) entourant le boîtier d'échangeur de chaleur (16) au moins dans certaines régions est prévu, dans lequel une zone de butée d'élément de précontrainte (74) est prévue sur le boîtier extérieur (58) à l'opposé de l'ouverture de logement du capteur (42), dans lequel l'élément de précontrainte (52) est fixé dans une zone de fixation (54) par rapport au boîtier extérieur (58),
**caractérisé en ce que**
- l'élément de précontrainte (52) a une configuration de type ressort à lame, dans lequel la zone de fixation (54) est prévue dans une zone d'extrémité d'élément de précontrainte (52) et la zone d'action (56) est prévue dans une autre zone d'extrémité d'élément de précontrainte (52),
- l'élément de précontrainte (52) a une configuration en U dans sa zone d'action (56) et est supporté par une première jambe en U (72) par rapport à la zone de butée de l'élément de précontrainte (74) et est supporté par une seconde jambe en U (78) par rapport au capteur (40).

2. Echangeur de chaleur selon la revendication 1, **caractérisé en ce qu'**une ouverture (80) est prévue dans la zone de butée d'élément de précontrainte (74) du boîtier extérieur (58).

3. Echangeur de chaleur selon l'une des revendications 1 ou 2, **caractérisé en ce que** dans la zone de butée d'élément de précontrainte (74) une surface de butée (76) est prévue qui est essentiellement à angle droit par rapport à un axe longitudinal central (L) du capteur (40) ou/et à l'ouverture de logement du capteur (42) le recevant pour soutenir la zone d'action (56) de l'élément de précontrainte (52).

4. Echangeur de chaleur selon l'une des revendications précédentes, **caractérisé en ce que** le boîtier extérieur (58) comporte une saillie de fixation (66) qui fait saillie en direction de la paroi extérieure et s'insère dans une ouverture de fixation (62) de la zone de fixation (54).

5. Echangeur de chaleur selon la revendication 4, **caractérisé en ce qu'**une pluralité de saillies (64) agissant sur une paroi circonférentielle extérieure de la saillie de fixation (66) sont prévues sur la circonférence intérieure de l'ouverture de fixation (62).

6. Echangeur de chaleur selon la revendication 5, **caractérisé en ce que** la saillie de fixation (66) a une configuration de préférence conique en direction de la paroi extérieure (24).

7. Echangeur de chaleur selon la revendication 4, **caractérisé en ce que** l'ouverture de fixation (62) a une forme de trou de serrure et **en ce que** la saillie de fixation (66) a une tête de saillie (84) chevauchant une zone étroite (86) de l'ouverture de fixation (62).

8. Echangeur de chaleur selon l'une des revendications 4 à 7, **caractérisé en ce qu'**une formation anti-rotation, qui maintient l'élément de précontrainte (52) contre la rotation autour de la saillie de fixation (66), est prévue au niveau du boîtier extérieur (58), de préférence avec au moins une saillie anti-rotation (68, 70) faisant saillie en direction de la paroi extérieure (24).

9. Echangeur de chaleur selon l'une des revendications précédentes, **caractérisé en ce que** le boîtier extérieur (58) est en matière plastique ou/et que le capteur (40) est un capteur de température.

10. Chauffage de véhicule opéré à carburant, comprenant une zone de brûleur (12) et une unité d'échange de chaleur (22) selon à l'une des revendications précédentes.
